# DEMANDE DE BREVET EUROPEEN

(11) **EP 0 987 152 A1**
(43) Date de publication de la demande: **22.03.2000**
(21) Numéro de dépôt: 99117457.4
(22) Date de dépôt: 09.09.1999
(51) Int. Cl.: B60R 25/02

(54) **Antivol perfectionné de véhicule automobile comportant des moyens de fixation d'un mécanisme d'antivol**

(30) Priorité: 16.09.1998 FR 9811602
(71) Demandeur: Antivols Simplex, 21850 Saint Apollinaire (FR)
(72) Inventeur: Touratier, Thierry, 21000 Dijon (FR)
(74) Mandataire: Lemaire, Marc

(57) **Abrégé**

L'invention propose un antivol qui comporte un boîtier comportant au moins une coque (34) dans laquelle le mécanisme d'antivol est fixé par l'intermédiaire d'au moins une tige filetée formant vis d'assemblage et de fixation (44) qui s'étend axialement à l'intérieur de la coque (34) du boîtier et dans un perçage (70) du corps du mécanisme, caractérisé en ce que, en position serrée de la vis, au moins une première face latérale externe (62) qui délimite le corps (32) du mécanisme est serrée transversalement en appui contre une portion de surface interne en vis-à-vis (63) d'une première paroi latérale (52) de la coque (34) du boîtier, et en ce que le corps (32) comporte une partie (80) qui est expansible transversalement sous l'action de la tige filetée (42, 45) lors du vissage de cette dernière pour provoquer le serrage.

## Description

L'invention concerne un antivol pour une colonne de direction de véhicule automobile comportant des moyens perfectionnés de fixation des composants de l'antivol.

L'invention concerne plus particulièrement un antivol pour une colonne de direction de véhicule automobile, du type dans lequel l'antivol comporte un boîtier dans lequel est agencé un mécanisme d'antivol, et du type dans lequel le mécanisme d'antivol comporte un élément mobile de verrouillage qui se déplace en translation longitudinale d'arrière en avant entre une position de repos, dans laquelle l'antivol est déverrouillé, et une position active dans laquelle l'antivol est verrouillé.

Le boîtier de l'antivol peut avoir plusieurs fonctions.

Lorsque l'antivol est agencé à l'intérieur de l'habitacle du véhicule, près du volant, il permet d'une part de dissimuler le mécanisme d'antivol qui est peu esthétique et d'autre part d'éviter qu'un utilisateur du véhicule ne se salisse au contact de la graisse qui peut éventuellement être utilisée pour lubrifier le mécanisme.

En évitant tout contact entre l'usager et le mécanisme, on évite que l'usager ne se blesse ou qu'il n'endommage ou ne bloque par inadvertance l'antivol.

Dans le cas où l'antivol est un antivol électrique dans lequel l'élément mobile est motorisé, l'ensemble de l'antivol peut être agencé à l'extérieur de l'habitacle, par exemple à proximité de l'extrémité de la colonne de direction qui est en liaison par exemple avec une crémaillère de direction. Seuls les moyens de commande de l'antivol restent alors accessibles depuis l'habitacle.

Dans ce cas, le boîtier aura aussi pour râle d'isoler le mécanisme de l'antivol des poussières et projections diverses auxquelles il est susceptible d'être exposé.

Dans tous les cas, le boîtier d'antivol permet par ailleurs d'éviter qu un cambrioleur ne puisse intervenir directement sur le mécanisme pour provoquer le déverrouillage de l'antivol et ainsi s'emparer du véhicule.

Le boîtier doit être conçu avec des dimensions telles qu'il permet d'admettre les tolérances de fabrication des différents composants et de garantir ainsi que le mécanisme puisse être monté à l'intérieur du boîtier lors des opérations d'assemblage.

Toutefois, à l'issue des opérations de montage, le mécanisme doit être fixé sans jeu dans le boîtier et de manière précise.

L'invention concerne plus particulièrement un antivol dans lequel le boîtier comporte au moins une coque dans laquelle le mécanisme d'antivol est fixé par l'intermédiaire d'au moins une tige filetée formant vis d'assemblage et de fixation, accessible depuis l'extérieur de la coque du boîtier, qui s'étend axialement à l'intérieur de la coque du boîtier et dans un perçage du corps du mécanisme.

Afin de résoudre les problèmes mentionnés précédemment, l'invention propose un antivol pour une colonne de direction de véhicule automobile, du type dans lequel l'antivol comporte un boîtier dans lequel est agencé un mécanisme d'antivol, et du type dans lequel le mécanisme d'antivol comporte un élément mobile de verrouillage qui se déplace en translation longitudinale d'arrière en avant entre une position de repos, dans laquelle l'antivol est déverrouillé, et une position active dans laquelle l'antivol est verrouillé, et du type dans lequel le boîtier comporte au moins une coque dans laquelle le mécanisme d'antivol est fixé par l'intermédiaire d'au moins une tige filetée formant vis d'assemblage et de fixation, accessible depuis l'extérieur de la coque du boîtier, qui s'étend axialement à l'intérieur de la coque du boîtier et dans un perçage du corps du mécanisme, caractérisé en ce que en position serrée de la vis, au moins une première face latérale externe qui délimite le corps du mécanisme est serrée transversalement en appui contre une portion de surface interne en vis-à-vis d'une première paroi latérale de la coque du boîtier sensiblement parallèle à l'axe de la vis, et en ce que le corps du mécanisme comporte une partie qui est expansible transversalement sous l'action de la tige filetée lors du vissage de cette dernière pour coopérer avec une portion de surface interne en vis-à-vis d'une seconde paroi latérale de la coque du boîtier, parallèle et opposée à la première paroi latérale, pour provoquer le serrage de la première face latérale du corps du mécanisme en appui contre la face latérale interne de la première paroi latérale de la coque.

Selon d'autres caractéristiques de l'invention :
- la partie expansible est réalisée venue de matière avec le corps du mécanisme ;
- la partie expansible du corps du mécanisme est une patte qui est reliée au corps du mécanisme par une portion de matière formant charnière d'articulation de la patte autour d'un axe perpendiculaire à l'axe de la vis ;
- la patte articulée comporte une première facette latérale, inclinée par rapport à l'axe de la vis, formant une rampe de commande avec laquelle coopère la vis lors du vissage pour provoquer son pivotement à partir d'une position d'origine vers une position expansée dans laquelle elle provoque le serrage de la première face latérale du mécanisme en appui contre la face latérale interne de la première paroi latérale de la coque ;
- la patte articulée comporte une seconde facette latérale plane qui est coplanaire à ladite seconde face latérale du corps du mécanisme lorsque la patte est dans sa position d'origine, et qui fait saillie transversalement vers l'extérieur par rapport à ladite seconde face lorsque la patte articulée est dans sa position expansée ;
- le perçage du corps du mécanisme est taraudé et reçoit en vissage un tronçon fileté de la vis ;
- en position serrée de la vis, la face supérieure externe qui délimite le corps du mécanisme est serrée axialement contre une portion de surface interne en vis-à-vis d'une paroi supérieure de la coque du boîtier ;
- la paroi supérieure de la coque comporte un trou oblong, d'orientation transversale, pour le passage du corps de la tige de la vis ;
- la tête de la vis est séparée de la tige filetée, par rupture lorsque le couple de serrage ou de desserrage appliqué à la tête est supérieur à une valeur prédéterminée.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée des principaux composants d'un antivol de colonne de direction de véhicule automobile réalisé conformément aux enseignements de l'invention ;
- la figure 2 est une vue de dessus de la coque du boîtier avec le corps du mécanisme en position montée, l'ensemble étant représenté avant la mise en place de la vis d'assemblage et de fixation ;
- la figure 3 est une vue en section selon la ligne 3-3 de la figure 2 ;
- la figure 4 est une vue similaire à celle de la figure 3 sur laquelle la vis d'assemblage et de fixation est illustrée en position vissée et serrée ; et
- la figure 5 est une vue de détail et à plus grande échelle qui illustre en perspective la patte expansible du corps du mécanisme.

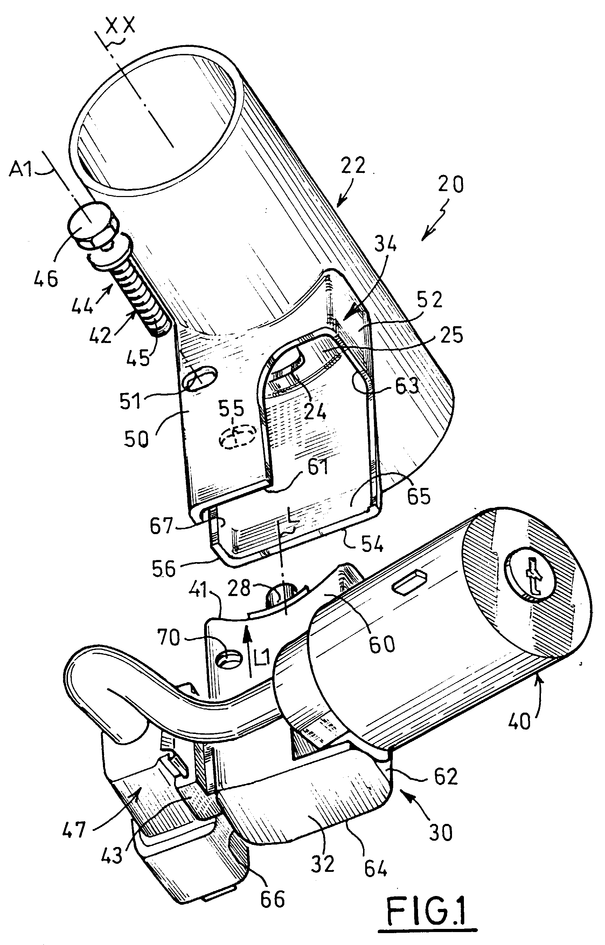

On a représenté sur la figure 1 les principaux composants d'un antivol de direction 20 de conception générale connue.

Sur cette figure, on peut voir un tube 22 de guidage d'une colonne de direction (non représentée) qui est montée à rotation à l'intérieur du tube 22 autour de l'axe X-X.

Le tube 22 comporte une fenêtre 24 destinée à permettre le passage de l'extrémité libre avant d'un pêne de verrouillage 28 appartenant à un mécanisme 30 d'antivol.

Le pêne 28 est monté mobile en coulissement longitudinal selon une direction L sensiblement perpendiculaire et concourante à l'axe X-X.

Le mécanisme d'antivol 30 comporte un corps 32 de mécanisme, formant guide du pêne de verrouillage 28, qui est de forme générale parallélépipédique rectangle et qui, en position assemblée de l'antivol, est reçu à l'intérieur d'une coque ou coquille métallique 34 de forme complémentaire de celle du corps 32 et qui est rapportée, par exemple par soudage, sur le tube de colonne de direction 22 de manière que le pêne de verrouillage 28 soit en regard de la fenêtre 24.

On voit aussi sur la figure 1 un verrou 40 de la colonne de direction qui agit sur le pêne 28, selon un agencement connu non représenté sur les figures, et une partie 43 de raccordement au corps d'un contacteur électrique 47, lui aussi de conception générale connue.

L'assemblage du mécanisme d'antivol 30 dans la coque 34 s'effectue en l'introduisant longitudinalement, c'est-à-dire parallèlement à la direction L et dans le sens indiqué par la flèche L1 de la figure 1, à l'intérieur de la coque 34, d'arrière en avant, jusqu'à ce que la face d'extrémité longitudinale avant 41 du corps 32 soit sensiblement en appui contre la portion en vis-à-vis 25 du tube de colonne de direction 22.

Pour fixer le mécanisme 30 dans cette position d'assemblage, il est connu de faire appel à une tige filetée d'assemblage et de fixation 44 faisant notamment fonction de goupille qui s'étend transversalement dans un trou supérieur 51 formé dans au moins une paroi correspondante supérieure 50 de la coque 34 et qui est reçue dans un perçage taraudé 70 du corps 32 du mécanisme d'antivol 30 à l'intérieur duquel elle s'étend selon son axe A1 de manière à positionner et à immobiliser longitudinalement le corps 32 du mécanisme dans la coque 34.

Selon une conception connue, la tige d'assemblage 42 appartient à une vis d'assemblage 44 qui comporte une tête supérieure 46 d'entraînement en rotation et un tronçon central fileté 45 qui est prévu pour être vissée dans le perçage taraudé 70.

Sous l'action du verrou 40, il est alors possible de provoquer des déplacements longitudinaux en va-et-vient dans les deux sens du pêne 28 afin de provoquer le verrouillage ou le déverrouillage de la colonne de direction.

Le corps 32 est délimité par quatre faces extérieures, 60, 62, 64 et 66, d'orientation longitudinale, qui sont sensiblement perpendiculaires entre elles, et la coque 34, de forme complémentaire, est constituée par quatre parois minces en vis-à-vis - 50, 52, 54 et 56 respectivement - dont chacune comporte une surface interne - 61, 63, 65 et 67 respectivement - qui s'étend, par exemple avec un jeu, en regard des faces 50 à 56.

Plus précisément, la coque comporte deux parois supérieure 50 et inférieure 54 dont chacune comporte un trou supérieur 51 et respectivement inférieur 55 qui sont tous les deux des trous oblongs d'orientation transversale destinés à permettre le passage de la tige 42 de la vis d'assemblage 44.

La coque comporte aussi une première paroi latérale 52 et une seconde paroi latérale opposée 56 qui, en association avec les parois supérieure 50 et inférieure 54, délimite le logement interne de forme parallélépipédique rectangle de la coque 34 qui reçoit le corps 32 de forme complémentaire du mécanisme d'antivol 30.

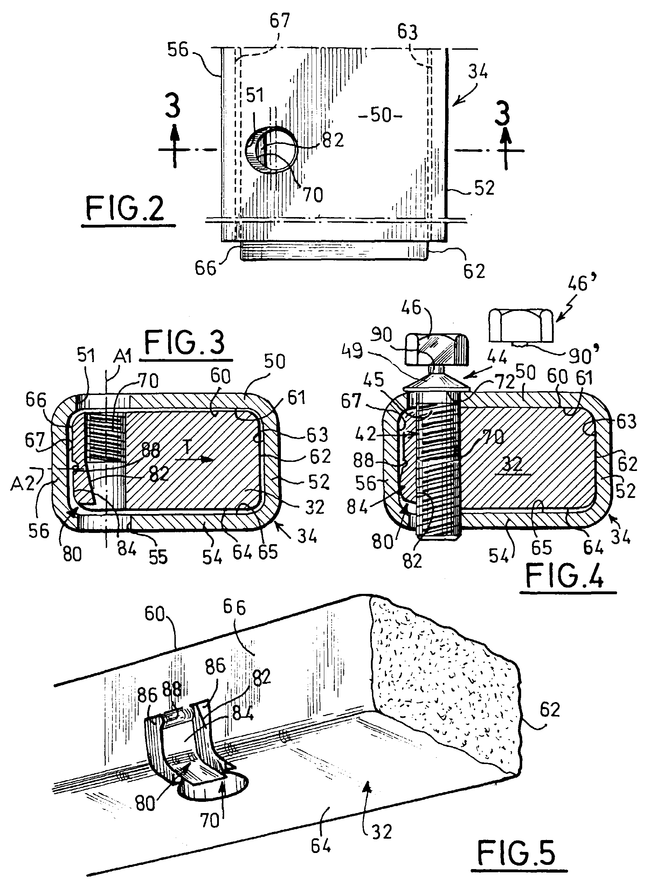

Comme on peut le voir aux figures 2 et 3, après que l'on ait mis en place le corps 32 dans la coque 34 dans la position longitudinale correspondant sensiblement à un alignement du trou taraudé 70 avec les trous supérieur 51 et inférieur 55, il peut exister un jeu entre les différentes faces externes 60 à 66 du corps 32 et les surfaces internes en vis-à-vis 61 à 67 des parois 50 à 56 de la coque 34.

Conformément aux enseignements de l'invention, il est prévu que, à la fin de l'opération de vissage et de serrage, le corps 32 est en appui par deux de ses faces supérieure 60 et latérale 62 contre deux surfaces internes en vis-à-vis 61 et 63 de la coque 34, ces deux surfaces étant sensiblement perpendiculaires entre elles.

Dans ce but, il est prévu des moyens provoquant d'abord un serrage transversal, selon la flèche T de la figure 3, de la face 62 contre la surface interne 63 de la paroi 52. A cet effet, le corps 32 comporte une patte 80, réalisée ici venue de matière par moulage avec le corps 32 du mécanisme 30, formant cheville expansible de serrage.

Dans le mode de réalisation préféré de l'invention illustré aux figures, la patte 80 est délimitée latéralement par une première facette inclinée 82 et par une seconde facette 84 qui est sensiblement coplanaire à la seconde face latérale 66 du corps 32 lorsque la patte expansible 80 est dans son état d'origine illustré aux figures 3 et 5, c'est-à-dire avant introduction et vissage de la vis 44.

A cet effet, la patte expansible 80 résulte de la formation de deux fentes verticales 86 d'orientation transversale qui la délimitent longitudinalement et elle est reliée, au voisinage de son extrémité supérieure en considérant les figures, par une portion amincie 88 formant charnière d'articulation de la patte expansible 80 autour d'un axe A2 qui est ainsi perpendiculaire à l'axe A1 du trou taraudé 70 et qui est d'orientation longitudinale.

La conception de la patte expansible 80 est telle que, dans son état d'origine, la première facette inclinée 82 s'étend à l'intérieur du perçage taraudé 70, c'est-à-dire sur le trajet de la vis d'assemblage et de fixation 44 de manière à constituer une rampe inclinée de commande du pivotement de la patte expansible 80, dans le sens horaire en considérant la figure 3, de son état d'origine vers son état expansé illustré à la figure 4.

En effet, lorsque l'on introduit et que l'on commence à visser le tronçon fileté 45 de la tige 42 de la vis 44, son bord d'extrémité libre inférieur va venir progressivement coopérer avec la facette formant rampe 82.

Cette coopération provoque le pivotement de la patte expansible 80, ce pivotement ayant pour conséquence la venue en contact de la facette 84 avec la surface interne 67 de la seconde paroi latérale 56 pour provoquer le déplacement transversal, selon la flèche T de la figure 3, du corps 32 et donc le serrage transversal correspondant des surfaces 62 et 63.

Le serrage peut se poursuivre jusqu'à ce que la collerette supérieure 49 de la vis 44 vienne en appui par sa face inférieure 72 contre la face supérieure de la paroi supérieure 50.

La poursuite du serrage provoque alors par réaction la venue en contact de la face supérieure 60 du corps 32 contre la face interne 61 de la paroi supérieure 50 de la coque 34.

Ainsi, à la fin de l'opération de serrage de la vis, deux faces perpendiculaires 60 et 62 du corps 32 sont en appui sans jeu contre deux surfaces internes 61 et 63 des parois 50 et 52 de la coque 34.

Selon une autre caractéristique de l'invention, si le couple de serrage ou de desserrage appliqué à la tête 46 de la vis 44 est supérieur à une valeur prédéterminée, il se produit une rupture de la portion 90 de la vis 44 qui relie la collerette 49 à la tête 46. Cette rupture peut être provoquée volontairement en fin de serrage de manière à éviter tour risque ultérieur d'effraction par démontage de la vis 44. La tête 46' ainsi séparée de la vis 44 est illustrée en trait fin à la partie supérieure de la figure 4.

## Revendications

1. Antivol (20) pour une colonne de direction de véhicule automobile, du type dans lequel l'antivol comporte un boîtier dans lequel est agencé un mécanisme d'antivol, et du type dans lequel le mécanisme (30) d'antivol comporte un élément mobile de verrouillage (28) qui se déplace en translation longitudinale d'arrière en avant entre une position de repos, dans laquelle l'antivol est déverrouillé, et une position active dans laquelle l'antivol est verrouillé, et du type dans lequel le boîtier comporte au moins une coque (34) dans laquelle le mécanisme d'antivol (30) est fixé par l'intermédiaire d'au moins une tige filetée formant vis d'assemblage et de fixation (44), accessible depuis l'extérieur de la coque (34) du boîtier, qui s'étend axialement (A1) à l'intérieur de la coque (34) du boîtier et dans un perçage du corps du mécanisme, caractérisé en ce que, en position serrée de la vis, au moins une première face latérale externe (62) qui délimite le corps (32) du mécanisme (30) est serrée transversalement en appui contre une portion de surface interne (63) en vis-à-vis d'une première paroi latérale (52) de la coque (34) du boîtier sensiblement parallèle à l'axe (A1) de la vis (44), et en ce que le corps (32) du mécanisme comporte une partie (80) qui est expansible transversalement sous l'action de la tige filetée (42, 45) lors du vissage de cette dernière pour coopérer avec une portion de surface interne (67) en vis-à-vis d'une seconde paroi latérale (56) de la coque du boîtier, parallèle et opposée à la première paroi latérale, pour provoquer le serrage de la première face latérale (62) du corps du mécanisme en appui contre la face latérale interne (63) de la première paroi latérale de la coque.

2. Antivol selon la revendication 1, caractérisé en ce que la partie expansible (80) est réalisée venue de matière avec le corps (32) du mécanisme.

3. Antivol selon la revendication 2, caractérisé en ce que la partie expansible (80) du corps (32) du mécanisme est une patte qui est reliée au corps du mécanisme par une portion de matière (88) formant charnière d'articulation de la patte autour d'un axe (A2) perpendiculaire à l'axe (A1) de la vis (44).

4. Antivol selon la revendication 3, caractérisé en ce que la patte articulée (80) comporte une première facette latérale (82), inclinée par rapport à l'axe (A1) de la vis, formant une rampe de commande avec laquelle coopère la vis (45, 41) lors du vissage pour provoquer son pivotement à partir d'une position d'origine vers une position expansée dans laquelle elle provoque le serrage de la première face latérale (62) du corps du mécanisme en appui contre la face latérale interne (63) de la première paroi latérale (52) de la coque (34).

5. Antivol selon la revendication 4, caractérisé en ce que la patte articulée (80) comporte une seconde facette latérale plane (84) qui est coplanaire à ladite seconde face latérale (66) du corps du mécanisme lorsque la patte (80) est dans sa position d'origine, et qui fait saillie transversalement vers l'extérieur par rapport à ladite seconde face (66) lorsque la patte articulée (80) est dans sa position expansée.

6. Antivol selon l'une quelconque des revendications précédentes, caractérisé en ce que le perçage (70) du corps du mécanisme est taraudé et reçoit en vissage un tronçon fileté (45) de la vis (42, 44).

7. Antivol selon l'une quelconque des revendications précédentes, caractérisé en ce que, en position serrée de la vis, la face supérieure externe (60) qui délimite le corps (32) du mécanisme est serrée axialement contre une portion de surface interne (61) en vis-à-vis d'une paroi supérieure (50) de la coque du boîtier.

8. Antivol selon la revendication 7, caractérisé en ce que la paroi supérieure (50) de la coque comporte un trou oblong (51), d'orientation transversale, pour le passage du corps de la tige de la vis.

9. Antivol selon l'une quelconque des revendications précédentes, caractérisé en ce que la tête (46) de la vis (44) est séparée (46') de la tige filetée par rupture lorsque le couple de serrage ou de desserrage appliqué à la tête est supérieur à une valeur prédéterminée.
